# EUROPEAN PATENT SPECIFICATION

(11) **EP 2 854 377 B1**
(45) Date of publication and mention of the grant of the patent: **13.07.2016**
(21) Application number: 13306342.0
(22) Date of filing: 27.09.2013
(51) Int. Cl.: H04L 29/12

(54) **A METHOD FOR CENTRALIZED ADDRESS RESOLUTION**
VERFAHREN ZUR ZENTRALISIERTEN ADRESSAUFLÖSUNG
PROCÉDÉ DE RÉSOLUTION D'ADRESSES CENTRALISÉ

(43) Date of publication of application: 01.04.2015
(73) Proprietor: ALCATEL LUCENT, 92100 Boulogne-Billancourt (FR)
(72) Inventor: Bui, Dinh Thai, 91620 NOZAY (FR); Le Pallec, Michel, 91620 NOZAY (FR)
(74) Representative: Berthier, Karine

(56) References cited:
- CN-A- 102 457 586
- US-A1- 2012 158 997
- US-A1- 2013 155 906

## Description

### BACKGROUND OF THE INVENTION

### Field of the invention

The present invention generally relates to Internet protocol address resolution in data centers. A data center is a physical complex housing: physical servers, network switches and routers, network service appliances, and networked storage. The purpose of a data center is to provide application, computing and/or storage services to customers. In a data center, a customer is called a "tenant". It can be a person, an organization within an enterprise, or an enterprise, associated to a set of compute, storage and network resources of the data center. A virtual layer 2 or layer 3 domain that belongs to a tenant constitutes a virtual network.

One of the services provided to the tenants of a data center is virtualized infrastructure, also known as infrastructure as a service: Several virtual machines share the resources of a single physical computer server using the services of a hypervisor. A hypervisor is server virtualization software running on a physical compute server that hosts virtual machines. The hypervisor provides shared computing, memory, storage, and network connectivity to the virtual machines that it hosts. It often embeds a virtual network node such as a virtual switch or a virtual router that provides services similar to those of respectively a physical Ethernet switch or a physical IP router. It forwards frames between virtual machines and virtual network interface controllers, within the same physical server, or between a virtual machine and a physical network interface controller card connecting the server to a physical Ethernet switch or router. It also enforces network isolation between virtual machines that should not communicate with each other.

A data center also uses network virtualization, referred to as software-defined networking (SDN). It is the process of merging hardware resources, software resources, and networking functionality into a software-based virtual network. SDN allows network administrators to have programmable central control of network traffic via a SDN controller without requiring manual management of each individual network node. A configuration of SDN can create a logical network control plane which is decoupled from the data forwarding plane hardware, i.e. a network node can forward packets and a separate server can run the network control plane (i.e. the controller).

Address resolution in a local area network is classically made by using the protocol ARP (Address Resolution Protocol, IETF RFC 826) in IPv4 (Internet Protocol version 4). The protocol NDP (Neighbor Discovery Protocol, IETF RFC 4861) is similarly used in IPv6 (Internet Protocol version 6). They map an IP address to a physical machine address that is recognized in the local network. For example, in IPv4, an address is 32 bits long, whereas a physical address is 48 bits long, for instance, in an Ethernet local area network. (In this case, a physical machine address is also called as a Media Access Control (MAC) address) A table, usually called the ARP cache, is used to maintain a correlation between each MAC address and the corresponding IP address. The protocol ARP provides protocol rules for making this correlation, and provides address conversion.

When a sender sends a packet destined for a receiver on a local area network, it first asks its local ARP program to find a physical address, e.g. a MAC address that is associated to the destination IP address. The ARP program looks into the ARP cache. If the ARP program finds the destination MAC address, it provides the later to the sender so that the IP packet can be encapsulated into the right MAC frame length and format, and then sent to the receiver. If no matched entry is found in the ARP cache for the destination IP address, the protocol ARP broadcasts a request packet, in a special format, to all the machines on the local area network, to check whether one machine has this IP address associated with it. A machine that recognizes this IP address as its own address returns a reply while indicating its hardware address. The protocol ARP within the sender updates the ARP cache for future reference, and then sends the packet with the MAC address of the receiver (i.e. the machine that replied to the ARP request).

In a data center, the greatest flexibility in virtual machine and workload management occurs when it is possible to place a virtual machine (or workload) anywhere in the data center, regardless of what IP address the virtual machine uses and how the physical network is laid out. The movement of virtual machines within a data center is easiest when virtual machine placement and movement do not conflict with the IP subnet boundaries of the data center's network, so that the IP address of a virtual machine needs not to be changed to reflect its actual point of attachment on the network, from a layer 3 perspective. Thus, from a virtual machine management perspective, operations are simplified if all the servers implied in the virtual machine movement are on the same domain of layer 2. However this implies a large layer 2 domain. Address resolution using ARP in IPv4, and NDP in IPv6, raises scalability concern in data centers comprising a very large number of hosts, e.g. virtual machines. The IETF (Internet Engineering Task Force) has exposed this concern in the document *IETF RFC 6820:* Address Resolution Problems in Large Data Center Networks - T. Narten et al. - January 2013*.* They have created a Working Group named ARMD (Address Resolution for Massive number of hosts in the Data center) in order to work on a standardized solution specification.

### Description of the prior art for address resolution in data centers

1) Ovelay networks, such as the ones specified within the IETF NVO3 (Network Virtualization Over layer 3) Working Group, can be deployed in order to extend a layer 2 domain across the physical network (precisely across the underlay IP network) while maintaining it within a scalable ARP broadcast domain. Overlay networks are built using tunnel methods such as those described in the documents:
   - *IETF draft-sridharan-virtualization-nvgre-02 - NVGRE:* Network Virtualization using Generic Routing Encapsulation - M. Sridharan et al. - February 2013*.*
   - *IETF draft-mahalingam-dutt-dcops-vxlan-04 - VXLAN:* A Framework for Overlaying Virtualized Layer 2 Networks over Layer 3 Networks - M. Mahalingam et al. - May 2013*.*

   This solution is not good enough as it requires the implementation of a large number of multicast trees at the underlay network - i.e. the broadcast domain at the overlay network is mapped to the multicast domain at the underlay network. This implies the maintenance of a large number of states within the underlay network.
   Note: The layer 3 overlay network implementations raise other concerns with regard to virtual machine mobility such as the large amount of signaling (e.g. Open Shortest Path First (OSPF) signaling).
2) An alternative best-known solution has been provided by the document *IETF draft-shah-armd-arp-reduction-02 -* ARP Broadcast Reduction for Large Data Centers - H. Shah et al. - October 2011*.* This document proposes a method to reduce the number of ARP broadcasts that are sent throughout the network. This method is applied by a top of rack switch (ToR switch), i. e. a network node aggregating traffic from all the processing resources installed in a same rack. This ToR switch intelligently processes ARP frames, rather than simply broadcasting them throughout the broadcast domain. When such processing generates a positive result, an ARP proxy response from the top of rack switch contains the MAC address of the destination.

This solution is not good enough as it complexifies the design of a ToR switch and thus increases its cost. Indeed, the ToR switch has to monitor all ARP traffic transiting through this ToR switch, and has to process them in the following manner:
- ARP request protocol data units must be redirected to the control plane central processing unit.
- Gratuitous ARP protocol data units must be redirected to the control plane central processing unit.
- Other ARP reply protocol data units should be sent twice: one copy is sent to the control plane central processing unit, and another copy is forwarded out normally.

These operations require additional processing power and additional memory space for ARP caching (Layer 2 domain may be large). Moreover, the use of ARP aging timer on the ToR switch can lead to inconsistency when virtual machines are moved or are deleted. For instance, the following tricky situation can occur: Host A is attached to a top of rack switch #1, and host B is attached to a top of rack switch #2. If host B issues an ARP request for host A, and if the entry is available at switch #2, then switch #2 would send the ARP reply on behalf of host A. It is possible that host A is no longer available, but there is no way for switch #2 to know this, and it would continue to respond on behalf of host A, until its entry for host A has timed out.

Patent application US2013/0155906 A1 discloses MAC address resolution in a massive data center.

Thus, there is a need to provide a better technical solution for Internet protocol address resolution in data centers.

This problem is solved by the method according to the invention.

### SUMMARY OF THE INVENTION

The invention is carried out according to the appended independent claims. Optional features of the invention are carried out according to the appended dependent claims.

A first object of the invention is a method for centralized address resolution in a data center comprising at least one processing resource, at least one processing resource controller, at least one networking resource, and at least one networking resource software-defined network controller; this method comprising the steps of:
- maintaining a local address resolution database associated to a processing resource controller, for storing all the MAC address - IP address associations of the processing resources controlled by this controller;
- maintaining a local address resolution database associated to a networking resource software-defined network controller, for storing all the MAC address - IP address associations of the networking resources controlled by this controller;
- maintaining a centralized address resolution database for storing all the MAC address - IP address associations within the data center;
- when a resource requests the resolution of an IP address, sending a unicast read message from this resource to its controller, this controller checking whether the associated local database stores a MAC address associated to this IP address, and:
   -- if a MAC address, associated to this IP address MAC address, is stored in this local database, then supplying the MAC address to the resource that requested the resolution of this IP address;
   -- if no MAC address, associated to this IP address MAC address, is stored in this local database, then forwarding the unicast read message to the centralized address resolution database.

Thanks to the local databases respectively associated to the controllers, the method according to the invention enables replacing a set of ARP broadcast messages (or NDP multicast messages), on the data plane, by a single unicast message on the control plane. The use of a single unicast message solves the scalability issue presented in the first section, without reducing the flexibility concerning virtual machine mobility.

This method also improves scalability as it takes into consideration architecture with multiple SDN controllers, each one being responsible for a part of the data center resources.

A second object of the invention is a computer program product comprising computer-executable instructions for performing this method when the program is run on a computer.

Other features and advantages of the present invention will become more apparent from the following detailed description of embodiments of the present invention, when taken in conjunction with the accompanying drawings.

### BRIEF DESCRIPTION OF THE DRAWINGS

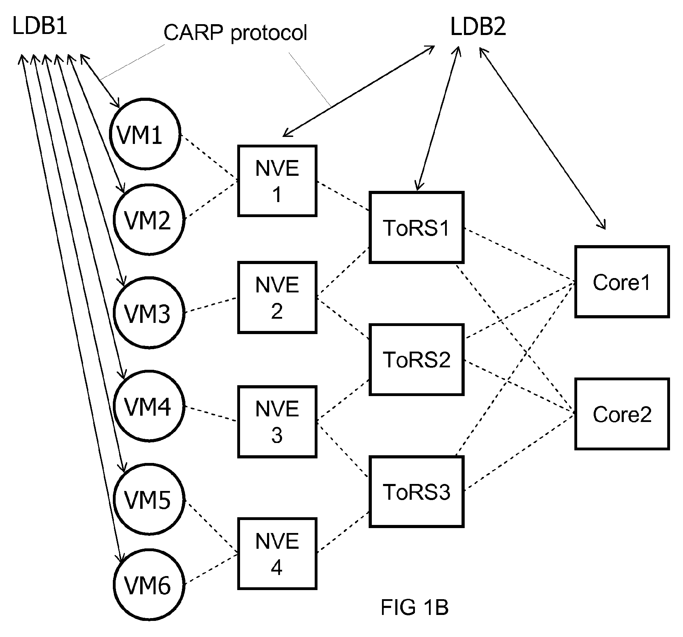

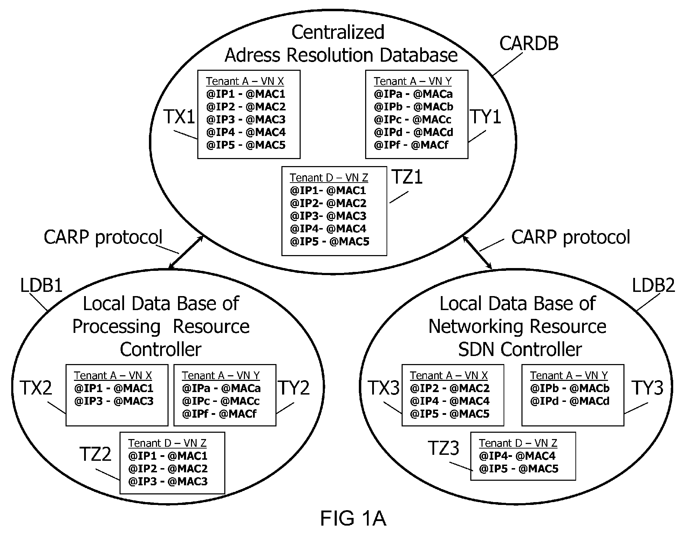

In order to illustrate in detail features and advantages of embodiments of the present invention, the following description will be with reference to the accompanying drawings: Figures 1 a and 1 b schematically represent two parts of an exemplary data center comprising an embodiment of the method according to the invention.

### DETAILED DESCRIPTION OF A PREFERRED EMBODIMENT

Description below will generally focus on an improvement to ARP in IPv4 but the described principles can also be applied in order to improve NDP in IPv6 (e.g. Neighbor Solicitation and Neighbor Advertisement).

The exemplary data center represented on Figures 1a and 1b comprises:
- Processing resources that are virtual machines VM1, ..., VM6 linked together via networking resources that are organized into three hierarchical levels.
- Network virtualization edges NVE1, ..., NVE4, are part of the first hierarchical level of the networking resources. Each network virtualization edge could be, for instance, a network entity that sits on the edge of a NVO3 network (Network Virtualization Overlayer 3 Network). They enable the use of the virtual machines VM1, ..., VM6. They implement network virtualization functions that allow for layer 2 and/or layer 3 tenant separation, and for hiding tenant addressing information (MAC and IP addresses). A network virtualization edge can be implemented as part of a virtual switch within a hypervisor, a physical switch, a router, or a network service appliance (not represented on the figures).
- Top of rack switches ToRS1, ToRS2, ToRS3 that are part of the second hierarchical level of the networking resources. They aggregate the traffic from the network virtualization edges NVE1, ..., NVE4.
- Core 1 and core 2 that are parts of the third hierarchical level of the networking resources. They are aggregation nodes aggregating traffic from the ToR switches ToRS1, ToRS2, ToRS3. Cores 1 and 2 are connected to the backbone (not represented) and to a wide area network.
- A centralized address resolution database CARDB storing all existing MAC - IP address associations within the data center: The centralized address resolution database CARDB is organized into a plurality of separate address resolution tables, TX1, TY1, TZ1, one table for each pair Tenant identifier - Virtual network identifier. In this example, the table TX1 is for the tenant A within the virtual network VN X. The table TY1 is for the tenant A within the virtual network VN Y. The table TZ1 is for the tenant D within the virtual network VN Z. Within each table, MAC-IP associations are stored in an ordered manner (e.g. IP address ordering). - A plurality of local address resolution databases LDB1, LDB2. A local address resolution database is associated to each networking resource SDN controller and to each processing resource controller. For simplicity of the description, it is supposed here that all the virtual machines VM1, ..., VM6 are controlled by a single processing resource controller and all the network nodes are controlled by a single networking SDN controller. In other embodiments, there can be more controllers, each controlling a smaller amount of resources and being associated to a smaller local address resolution database. In some cases, the Network Management System (NMS) can play the role of a networking resource SDN controller. It is to be noted that each controller stores, in the respective associated local database, all the information about MAC and IP addresses of its controlled resources, as well as the associations between these addresses.

It is noted that there could be an intermediary hierarchy of address resolution databases implemented between the aforementioned local database (e.g. LDB1, LDB2) hierarchy and the centralized database CARDB. This depends on the size and the architecture of the data center.

As shown in Figure 1A, the local database LDB1 of the processing resource controller is organized into three separate address resolution tables, TX2, TY2, TZ2, one table for each pair Tenant identifier - Virtual network identifier. These address resolution tables, TX2, TY2, TZ2 store all the associations between the IP addresses and MAC addresses, for all the processing resources that are controlled by the processing resource SDN controller.

For instance, the table TX2 for the tenant A within the virtual local area network VN X:
@IP1 - @MAC1
@IP3 - @MAC3

For instance, the table TY2 for the tenant A within the virtual local area network VN Y:
@IPa - @MACa
@IPc - @MACc
@IPf - @MACf

For instance, the table TZ2 for the tenant A within the virtual local area network VN Z:
@IP1 - @MAC1
@IP2 - @MAC2
@IP3 - @MAC3

So the local address resolution database LDB1 contains all the information about MAC and IP addresses of the processing resources controlled by the processing resource SDN controller, as well as the associations between these addresses.

Similarly, the local address resolution database LDB2 is organized into three separate address resolution tables, TX3, TY3, TZ3, one table for each pair Tenant identifier - Virtual network identifier. These address resolution tables, TX3, TY3, TZ3 store all the associations between the IP addresses and MAC addresses, for all the networking resources that are controlled by the networking resource SDN controller.

For instance, the table TX3 for the tenant A within the virtual local area network VN X:
@IP2 - @MAC2
@IP4 - @MAC4
@IP5 - @MAC5

For instance, the table TY3 for the tenant A within the virtual local area network VN Y:
@IPb - @MACb
@IPd - @MACd

For instance, the table TZ3 for the tenant A within the virtual local area network VN Z:
@IP4- @MAC4
@IP5 - @MAC5

So the local address resolution database LDB2 contains all the information about MAC and IP addresses of the networking resources controlled by the networking resource SDN controller, as well as the associations between these addresses.

The centralized address resolution database CARDB is populated by copying the entries written to the local address resolution databases LDB1 and LDB2.

The important point is that all controllers (including NMS if applicable) communicate with the centralized address resolution database CARDB via a new protocol according to the invention, called centralized address resolution protocol CARP, which is described in what follows.

According to the invention, the CARP protocol allows each controller (respectively associated to the local address resolution databases LDB1, LDB2) to communicate with the centralized address resolution database CARDB in order to:
- write entries into the centralized address resolution database CARDB, with a conflict detection mechanism;
- delete entries from the centralized address resolution database CARDB;
- read entries from the centralized address resolution database CARDB;
- optionally, enable the centralized address resolution database CARDB to warn a SDN controller that one of its entries has been deleted.

The proposed CARP protocol is also used for the communication between the virtual machines VM1, ..., VM6 and the local address resolution data base LDB1. In the same way, the CARP protocol is used for the communication between network nodes, such as the network virtualization edges NVE1, ..., NVE4, the top of rack switches ToRS1, ToRS2, ToRS3, the core 1 and core 2, and the local address resolution database LDB2.

According to the proposed CARP protocol, the address resolution procedure comprises the following steps:
- Each processing resource (e.g. a virtual machine) or network resource (e.g. a router interface) sends a CARP read message to its SDN controller (e.g. via the control channel), instead of classically broadcasting an ARP request message onto the virtual local area network. Such CARP read message is a unicast message playing the same role as the broadcasted classical ARP request message.
- If the SDN controller does not have the answer to the CARP read message (i.e. no corresponding entry in its local database), it forwards this CARP read message to the centralized address resolution database CARDB.
- The processing or network resource ultimately broadcasts a classical ARP request onto the virtual local area network (i.e. onto the data plane) if neither the local controller nor the centralized address resolution database CARDB has the answer to the CARP read message (i.e. no matched entry found in both databases for the request contained within the CARP read message).

Thanks to the invention, an IP host (e.g. a virtual machine VM1, ..., VM6) or an IP interface from a router (e.g. a virtual port of a virtual router), in most cases, only needs to send a unicast CARP read message to its controller in order to get the answer with regards to MAC-IP address association, instead of broadcasting a classical ARP request message onto the virtual local area network. Thus, a unicast read message, sent out on the control channel, replaces the classical broadcast/multicast request message sent out on the data plane (e.g. a virtual local area network). This solves the ARP broadcast scalability issue (on the data plane) as described previously in the Prior Art section.

### 1- Detailed description of the CARP protocol

The proposed CARP protocol creates and maintains a separate local address resolution table, in the local address resolution databases associated to a processing resource SDN controller, for each virtual local area network pertaining to a given tenant.

Similarly, the proposed CARP protocol creates and maintains a separate network-related address resolution table in the local address resolution database associated to a networking resource SDN controller, for each virtual local area network pertaining to a given tenant.

Within each local address resolution table, entries are sorted in a pre-defined order (e.g. IP address increase order) so as to accelerate looking up procedure. It is noted that the same IP address, and/or the same MAC address, can be part of different address resolution tables (i.e. there is some overlap).

It is noted that a NMS can play the role of a network SDN controller with the CARP protocol. However, if some routers cannot be included into the previously described procedure (e.g. because their related NMS does not support the proposed CARP protocol) then traditional ARP broadcast on the data plane should be applied for the resolution of addresses associated to those routers. However, in order to avoid scalability of ARP broadcast in a data center, it is recommended to include the maximal number of processing resources and network resources into the CARP procedure, especially virtualized resources (e.g. virtual machine and network virtualization edges) which tend to be of a very large number, and to be very dynamic (e.g. short time between their creation and their deletion).

Both the processing resource controller and the network resource controller copy the entries of their respective local databases LDB1 and LDB2 to the centralized address resolution database CARDB by using a CARP protocol WRITE message (see below for more details). Duplication (e.g. the same IP address written twice for the same virtual network identifier) should be avoided when writing into the centralized address resolution database CARDB, by using well-known database techniques. Writing conflicts should also be avoided, by using well-known database techniques.

Finally, the centralized address resolution database CARDB contains a merged version of all the local address resolution databases associated to SDN controllers.

The centralized address resolution database CARDB keeps track of the controller that is the origin of each of its entries (i.e. which entry is written by which controller). Its entries are said to be "colored" with the "color" of the origin controller.

Note: For IPv6, the centralized and the local address resolution tables can contain additional information such as:
- A subnet prefix associated to the IP address.
- A flag indicating whether the IP address is the address of a host or of a router interface.

This allows a SDN controller, or the centralized address resolution database, to gather together neighbors of the same IPv6 subnet, and to identify router interface IPv6 addresses present on a given IPv6 subnet.

### 2- CARP protocol exemplary message format:

CARP messages can be conveyed with an IP/UDP (Internet Protocol/Universal datagram Protocol) header. UDP port numbers can be implemented in a proprietary manner, but standardization is recommended for a broad deployment. In the later case, UDP port number for CARP protocol should be assigned by the IANA (Internet Assigned Number Authority).

CARP messages can also be conveyed with an Ethernet header over a point-to-point link (e.g. between a SDN controller and the centralized address resolution database CARDB) with a destination MAC address, chosen within the link local address range.

In an exemplary embodiment, the CARP message format comprises the following fields:
- IP Header: IPv4 header (Cf. RFC 791 - Figure 4) or IPv6 header (Cf. RFC 2460 - Chap. 3)
- UDP Header: source port, destination port, Length (UDP header + payload), checksum (Cf. RFC 768).
- Type (16 bits): indicates the Type of the CARP message. There are four types of CARP message:
   - Type = 0x1: WRITE message
   - Type = 0x2: WRITE_RESP message
   - Type = 0x3: READ message
   - Type = 0x4: READ_RESP message
   - Type = 0x5: DELETE message
   - Type = 0x6: DELETE_RESP Message
- Flags (16 bits):
   -- A flag is used within the WRITE message to indicate "color" change, i. e. flag = 0x01 indicates that IP-MAC pairs included in the message are changing the "color" to the one of the controller which sends the WRITE message. It is noted that the controller is identified by the centralized address resolution database thanks, for instance, to its IP address in the control network.
   -- A flag is used within the DELETE message to indicate "color" change, Flag = 0x81 indicates that IP-MAC pairs included in the message are changing the "color" from the one of the controller which sends the DELETE message.
   -- A flag is used within the WRITE_RESP message to indicate a write error:
      - Flags = 0x01: IP address duplication error
      - Flags = 0x02: MAC address duplication error
      - Flags = 0x04: IPv6 subnet mask error
      - Flags = 0xFF: unknown error
   -- A flag is used within the DELETE_RESP message to indicate a delete error:
      - Flags = 0xF1 (option): special FLAG (cf the note below)
      - Flags = 0x81: IP address does not exist
      - Flags = 0x82: MAC address does not exist
      - Flags = 0x84: IPv6 subnet mask error
      - Flags = 0x88: entry does not exist
      - Flags = 0xFF: unknown error

Note: Optionally, the centralized address resolution database CARDB can warn other SDN controllers that entries have just been deleted (in real-time manner) by the origin SDN controller. It can do this by sending out, to all those SDN controllers, a DELETE_RESP message with a special flag (Flag = 0xF1). In this case, the Sequence Number field is ignored by SDN controllers which receive the message.
- Sequence Number: It indicates the sequence number of the message. This field allows for associating a Response message (i.e. WRITE_RESP/READ_RESP) to a WRITE/READ message with the same sequence number. In the absence of a Response, a timer will expire and a configurable number of retries to send the same WRITE/READ message is performed.
- The rest of the message is organized into Type Length Value (TLV) structures that are explained in details below.

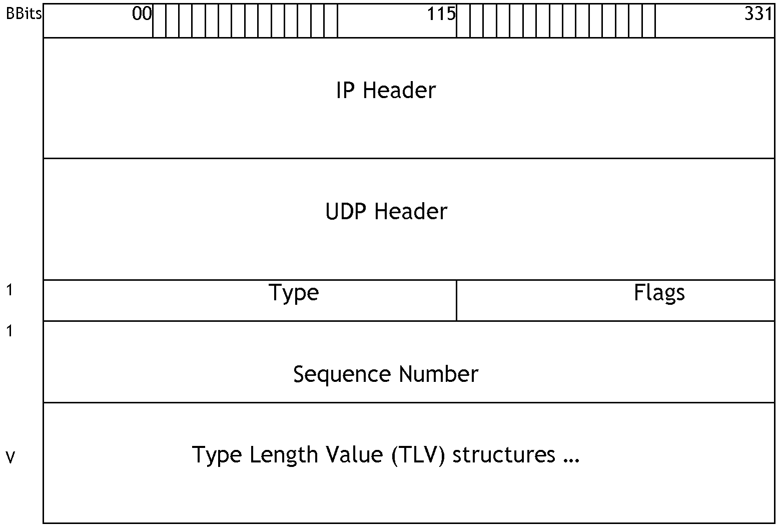

Different Type Length value structures are, for instance, defined as follows:
-- Context ID Type Length Value: It indicates the tenant identity (Tenant ID) and the virtual network identity (VN ID) where the IP or MAC addresses are applied to (due to address reuse).
   Notes: The presence of the tenant identity (Tenant ID) and the virtual network identity (VN ID) in the messages of the proposed CARP protocol is one of the differences with respect to the classical ARP messages. With the classical ARP protocol, the data plane is divided into virtual channels by means of the control/management plane, in order to isolate the traffics pertaining to different tenants.
   It is noted that those identities are to be managed within a centralized manner to ensure the unicity, across the data center, of the pair (Tenant ID, VN ID).
   It is noted that the virtual network identity, in the case of a layer 2 overlay over layer 3, identifies a layer 2 broadcast domain (or a layer 3 IP subnet). As a generalization, the virtual network identity can be used as an IP subnet identity. 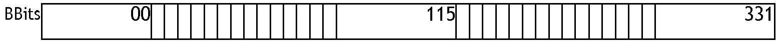 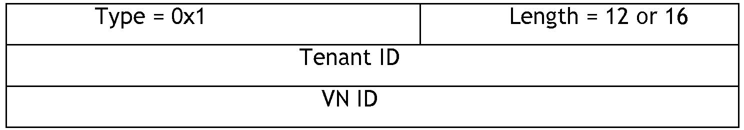
-- IPv4 TLV: This type length value is included into a READ message sent by a virtual machine or a router to the associated SDN controller, or by a SDN controller to the centralized address resolution database CARDB as replacement for an ARP request. It contains the list of IPv4 addresses whose associated MAC addresses are required. 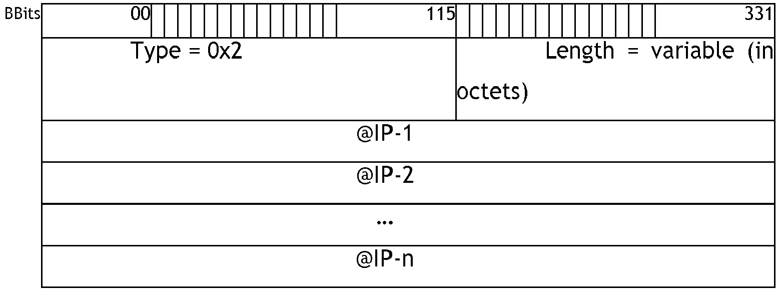
-- IPv4-MAC48 TLV: This type length value is included into:
   --- A READ_RESP message in response to the associated (i.e. with the same Sequence Number) READ message. It contains the list of IPv4-MAC48 address pairs. Some IPv4 addresses included in the IPv4 TLV (i.e. in READ message) might not be found in list of the IPv4-MAC48 TLV (i.e. in the READ_RESP message). In this case, this means their respective address resolution operation has failed.
   --- A WRITE message sent from a virtual machine/router (option) to the associated SDN controller or from a SDN controller to the centralized address resolution database CARDB. In the first case (option), it allows for a virtual machine/router, using the control channel, to double check whether or not an IP address raises an address conflict before using this address on the data plane. In the later case, it allows the SDN controller to write an entry into the centralized address resolution database CARDB with also a conflict detection mechanism.
   --- A WRITE_RESP message sent from the SDN controller to a virtual machine/router (option), or from the centralized address resolution database CARDB to a SDN controller in order to list the IPv4-MAC pairs which raise an error during the WRITE operation. The error type is indicated by the Flags field. It is noted that a WRITE_RESP message without any IPv4-MAC48 TLV and with a Flags field set to all zeros means that the associated WRITE message has been processed with 100% success.
   --- A DELETE message sent from a SDN controller to the centralized address resolution database CARDB in order to delete entries in the later database.
   --- A DELETE_RESP message sent from the centralized address resolution database CARDB to a SDN controller in order to list the IPv4-MAC pairs which raise an error during the DELETE operation. The error type is indicated by the Flags field. 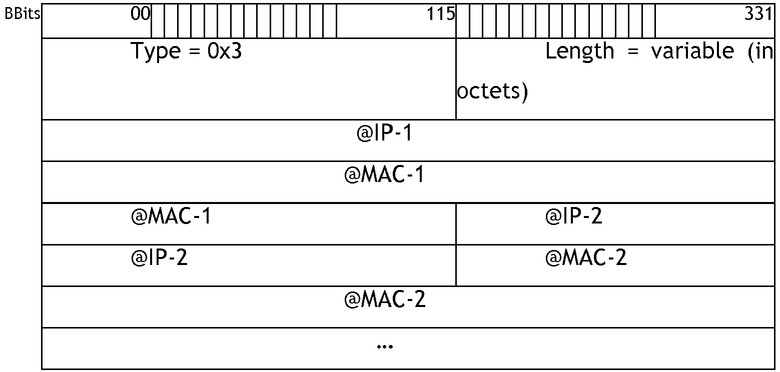
-- IPv4-MAC64 TLV: Similar role to IPv4-MAC48 TLV, except that the MAC address size is 64 bits. 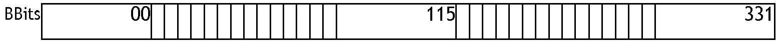 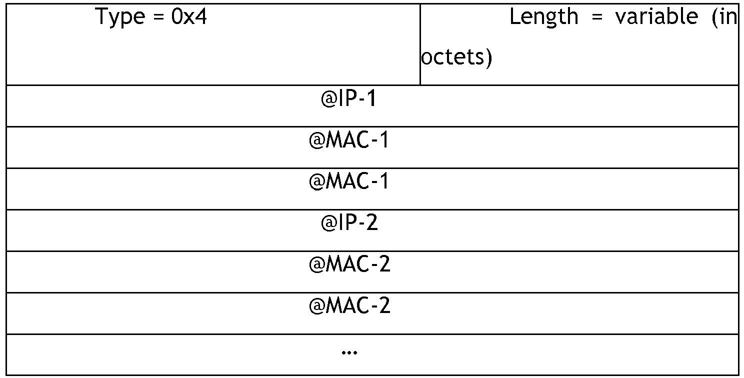
-- Router/Neighbor Request TLV: This type length value is included into the READ message from a virtual machine to its associated SDN controller, or from a SDN controller to the centralized address resolution database CARDB in order to get the default router list on the same subnet as the virtual machine. 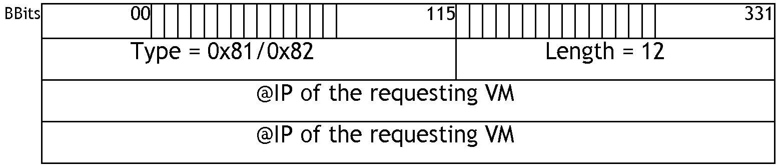
-- Router/Neighbor list TLV: This type length value is included into the READ_RESP message from a SDN controller to a virtual machine, or from the centralized address resolution database CARDB to a controller to provide with the Router/Neighbor list.

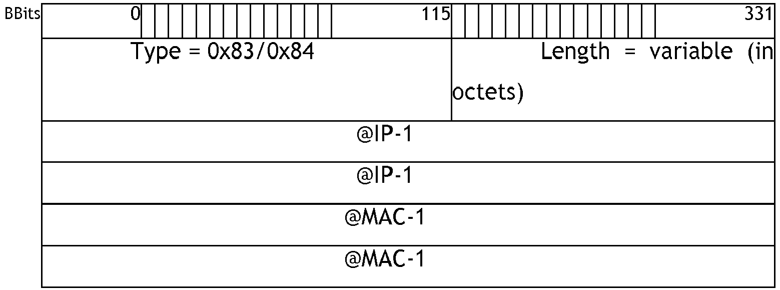

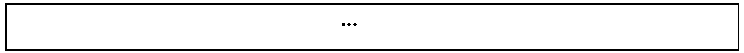

### 3) Operations when a virtual machine moves:

**Case 1:** Usually a virtual machine move is organized by a single processing resource controller (e.g. a move within the same Hypervisor/physical machine) within a same IP subnet. The virtual machine keeps the same IP and MAC addresses; and nothing is to be modified neither within the address resolution tables of its associated controller tables nor within the address resolution tables of the centralized address resolution database CARDB. Thus, such virtual machine move is seamless with regards to address resolution database modification according to the invention.
**Case 2:** The virtual machine moves within a same IP subnet, but implies two different processing resource controllers. It still keeps the same IP and MAC addresses. But, both processing resource controllers have to make modifications in their respective address resolution tables, with one deleting an entry and the other adding an entry. Both controllers should also inform the centralized address resolution database so that the later changes the "color" of the concerned entries. The controller that the virtual machine is quitting sends a DELETE message to the centralized address resolution database CARDB, whereas the other sends a WRITE message to the centralized address resolution database CARDB. These DELETE and WRITE messages can arrive at different instants at the centralized address resolution database CARDB:
   - If the WRITE message arrives before the DELETE message, then the centralized address resolution database CARDB does not (immediately) raise an address conflict error (i.e. replying with a WRITE_RESP message with an address duplication Flags field). But instead, it waits for the arrival of the DELETE message and changes subsequently the "color" of the involved entries. A timer can be used so that the centralized address resolution database CARDB raises an address conflict error when no associated DELETE message arrives at the timer expiry.
   - If the DELETE message arrives before the WRITE message, then the centralized address resolution database CARDB does not (immediately) delete the entries in its tables. But instead, it waits for the arrival of the associated WRITE message. A timer can also be used so that the centralized address resolution database CARDB deletes the entries if no associated WRITE message is received at the timer expiry.
**Case 3:** A virtual machine moves to a different IP subnet. In this case, the old entry should be deleted and a new entry should be added within the tables associated to the impacted controller(s), and possibly within the tables of the centralized address resolution database CARDB (if two controllers are involved).

The method according to the invention has also the advantage of displacing the complexity from the ToR switches (i.e. specific hardware) towards the controllers and the centralized database (i.e. commodity hardware). This generates a cost reduction.

## Claims

1. A method for centralized address resolution in a data center comprising at least one processing resource, at least one processing resource controller, at least one networking resource, and at least one networking resource software-defined network controller; this method comprising the steps of:
- maintaining a local address resolution database (LDB1) associated to a processing resource controller, for storing all the MAC address - IP address associations of the processing resources controlled by this controller;
- maintaining a local address resolution database (LDB2) associated to a networking resource software-defined network controller, for storing all the MAC address - IP address associations of the networking resources controlled by this controller;
- maintaining a centralized address resolution database (CARDB) for storing all the MAC address - IP address associations within the data center;
- when a resource requests the resolution of an IP address, sending a unicast read message from this resource to its controller, this controller checking whether the associated local database (LDB1, LDB2) stores a MAC address associated to this IP address, and:
-- if a MAC address, associated to this IP address, is stored in this local database, then supplying the MAC address to the resource that requested the resolution of this IP address;
-- if no MAC address, associated to this IP address, is stored in this local database, then forwarding the unicast read message to the centralized address resolution database (CARDB).

2. A method according to claim 1, wherein the unicast read message from a resource to its controller contains a tenant identity, Tenant ID, and a virtual network identity, VN ID.

3. A method according to claim 1, wherein maintaining a centralized address resolution database (CARDB) for storing all the MAC address - IP address associations within the data center comprises the steps of each controller copying in the centralized database (CARDB) each entry that is written in the local database (LDB1, LDB2) associated to this controller.

4. A method according to claim 3, wherein maintaining a centralized address resolution database (CARDB) for storing all the MAC address - IP address associations within the data center comprises the step of a controller writing, into the centralized address resolution database (CARDB), some information identifying this controller in association with each of its entries that are copied into the centralized database (CARDB).

5. A method according to claim 1, further comprising the step of sending a warning message from the centralized database (CARBD) to a controller when one entry that this controller has copied into the central database is deleted.

6. A method according to claim 1, wherein:
- the local address resolution database (LDB1) associated to a processing resource controller is organized in several tables (TX2, TY2, TZ2) so that it comprises one table for each pair tenant identity - virtual network identity;
- the a local address resolution database (LDB2) associated to a networking resource software-defined network controller, is organized in several tables (TX3, TY3, TZ3) so that it comprises one table for each pair tenant identity - virtual network identity;
- the centralized address resolution database (CARDB) is organized in several tables (TX1, TY1, TZ1) so that it comprises one table for each pair tenant identity - virtual network identity.

7. A method according to claim 1, wherein maintaining the central address resolution databases (CARDB) comprises the step of keeping track, in the centralized address resolution database, of each controller that is the origin of an entry.

8. A method according to claim 7, wherein, if a machine moves within a same IP subnet so that it is controlled by a first processing resource controller and then by a second resource controller, maintaining the central address resolution databases (CARDB) comprises the step of:
- the first controller sending a DELETE message to the central address resolution databases (CARDB) for deleting an entry;
- the second controller sending a WRITE message to the central address resolution databases (CARDB) for adding a new entry;
- informing the centralized address resolution database that the second controller is the origin of the new entry;
- and:
-- If the WRITE message arrives before the DELETE message, then the centralized address resolution database (CARDB) waiting, during a predetermined time interval, for the arrival of a DELETE message, before writing a new entry;
-- If the DELETE message arrives before the WRITE message, then the centralized address resolution database (CARDB) waiting for the arrival of the associated WRITE message, during a predetermined time interval, before writing a new entry; and if no associated WRITE message is received before the end of the time interval, deleting the entry to be deleted.

9. A digital data storage medium storing a set of machine executable program instructions, which, when executed on a computer, cause the computer to perform the steps of:
- maintaining a local address resolution database (LDB1, LDB2) associated to a processing or networking resource controller, for storing all the MAC address - IP address associations related to the resources controlled by said controller;
- maintaining a centralized address resolution database (CARDB) for storing all the MAC address - IP address associations within the data center, by copying, into the centralized database (CARDB), each entry that is stored in a local database (LDB1, LDB2);
- when a resource requests the resolution of an IP address, receiving a unicast read message from this resource, then checking whether the local database (LDB1, LDB2) associated to the controller that controls this resource, stores a MAC address associated to this IP address, and:
-- if a MAC address associated to this IP address is stored in this local database, then supplying the MAC address to the resource that requested the resolution of this IP address;
-- if no MAC address associated to this IP address is stored in this local database, then forwarding the unicast read message to the centralized address resolution database (CARDB).

10. A computer program product comprising computer-executable instructions for performing a method when the program is run on a computer, the method comprising the steps of:
- maintaining a local address resolution database (LDB1, LDB2) associated to a processing or networking resource controller, for storing all the MAC address - IP address associations related to the resources controlled by said controller;
- maintaining a centralized address resolution database (CARDB) for storing all the MAC address - IP address associations within the data center, by copying, into the centralized database (CARDB), each entry that is stored in a local database (LDB1, LDB2);
- when a resource requests the resolution of an IP address, receiving a unicast read message from this resource, then checking whether the local database (LDB1, LDB2) associated to the controller that controls this resource, stores a MAC address associated to this IP address, and:
-- if a MAC address associated to this IP address is stored in this local database, then supplying the MAC address to the resource that requested the resolution of this IP address;
-- if no MAC address associated to this IP address is stored in this local database, then forwarding the unicast read message to the centralized address resolution database (CARDB).

## Patentansprüche

1. Verfahren zur zentralisierten Adressenauflösung in einem Datenzentrum, mindestens eine Verarbeitungsressource, mindestens eine Verarbeitungsressourcensteuerung, mindestens eine Vernetzungsressource und mindestens eine von der Vernetzungsressourcensoftware definierte Netzwerksteuerung umfassend; wobei dieses Verfahren die folgenden Schritte umfasst:
- das Pflegen einer lokalen Adressauflösungsdatenbank (LDB1), die einer Verarbeitungsressourcensteuerung zugeordnet ist, zwecks Speicherung aller Zuordnungen von MAC-Adressen - IP-Adressen der von dieser Steuerung gesteuerten Verarbeitungsressource;
- das Pflegen einer lokalen Adressauflösungsdatenbank (LDB2), die einer von der Vernetzungsressourcensoftware definierten Netzwerksteuerung zugeordnet ist, zwecks Speicherung aller Zuordnungen von MAC-Adressen - IP-Adressen der von dieser Steuerung gesteuerten Vernetzungsressource;
- das Pflegen einer zentralen Adressauflösungsdatenbank (CARDB) für die Speicherung aller Zuordnungen von MAC-Adressen - IP-Adressen innerhalb des Datenzentrums;
- wenn eine Ressource die Auflösung einer IP-Adresse anfordert, das Senden einer Unicast-Read-Nachricht von dieser Ressource an ihre Steuerung, wobei diese Steuerung prüft, ob die zugeordnete lokale Datenbank (LDB1, LDB2) eine dieser IP-Adresse zugeordnete MAC-Adresse speichert, und:
-- wenn in der lokalen Datenbank eine dieser IP-Adresse zugeordnete MAC-Adresse gespeichert ist, das Zurverfügungstellen dieser MAC-Adresse für die Ressource, welche die Auflösung dieser IP-Adresse angefordert hat;
-- wenn in der lokalen Datenbank keine dieser IP-Adresse zugeordnete MAC-Adresse gespeichert ist, das Weiterleiten der Unicast-Read-Nachricht an die zentrale Adressauflösungsdatenbank (CARDB).

2. Verfahren nach Anspruch 1, wobei die Unicast-Read-Nachricht einer Ressource an ihre Steuerung eine Tenant-Identität (Tenant-ID) und eine virtuelle Netzwerkidentität (VN-ID) umfasst.

3. Verfahren nach Anspruch 1, wobei die Pflege einer zentralen Adressauflösungsdatenbank (CARDB) für die Speicherung aller Zuordnungen von MAC-Adressen - IP-Adressen innerhalb des Datenzentrums den Schritt umfasst, dass jede Steuerung jeden Eintrag in die zentrale Datenbank (CARDB) kopiert, der in die lokale Datenbank (LDB1, LDB2) eingetragen wird, die dieser Steuerung zugeordnet ist.

4. Verfahren nach Anspruch 3, wobei die Pflege einer zentralen Adressauflösungsdatenbank (CARDB) für die Speicherung aller Zuordnungen von MAC-Adressen - IP-Adressen innerhalb des Datenzentrums den Schritt umfasst, dass eine Steuerung in die zentrale Adressauflösungsdatenbank (CARDB) eine Reihe von Informationen einträgt, welche diese Steuerung in Assoziation mit jedem ihrer Einträge identifiziert, die in die zentrale Datenbank (CARDB) kopiert werden.

5. Verfahren nach Anspruch 1, weiterhin den Schritt des Sendens einer Warnnachricht von der zentrale Datenbank (CARDB) an eine Steuerung umfassend, wenn ein von dieser Steuerung in die zentrale Datenbank kopierter Eintrag gelöscht wird.

6. Verfahren nach Anspruch 1, wobei:
- die einer Verarbeitungsressource zugeordnete, lokale Adressauflösungsdatenbank (LDB1) in mehrere Tabellen (TX2, TY2, TZ2) gegliedert ist, so dass sie eine Tabelle für jedes Paar von Tenant-Identität - virtuelle Netzwerkidentität umfasst.
- die einer von einer Vernetzungsressourcensoftware definierten Netzwerksteuerung zugeordnete, lokale Adressauflösungsdatenbank (LDB2) in mehrere Tabellen (TX3, TY3, TZ3) gegliedert ist, so dass sie eine Tabelle für jedes Paar von Tenant-Identität - virtuelle Netzwerkidentität umfasst.
- die lokale Adressauflösungsdatenbank (CARDB) in mehrere Tabellen (TX1, TY1, TZ1) gegliedert ist, so dass sie eine Tabelle für jedes Paar von Tenant-Identität - virtuelle Netzwerkidentität umfasst.

7. Verfahren nach Anspruch 1, wobei die Pflege der zentralen Adressauflösungsdatenbank (CARDB) den Schritt umfasst, in der zentralen Adressauflösungsdatenbank jede Steuerung nachzuverfolgen, von der ein Eintrag ausgeht.

8. Verfahren nach Anspruch 7, wobei dann, wenn sich ein Gerät innerhalb ein und desselben IP-Teilnetzes so bewegt, dass es zunächst von einer ersten Verarbeitungsressourcensteuerung und dann von einer zweiten Verarbeitungsressourcensteuerung gesteuert wird, die Beibehaltung der zentralen Adressauflösungsdatenbank (CARDB) die folgenden Schritte umfasst:
- das Senden einer DELETE-Nachricht durch die erste Steuerung an die zentrale Adressauflösungsdatenbank (CARDB) zwecks Löschung eines Eintrags;
- das Senden einer WRITE-Nachricht an die zentrale Adressauflösungsdatenbank (CARDB) zwecks Hinzufügens eines neuen Eintrags;
- das Informieren der zentralen Adressauflösungsdatenbank, dass eine zweite Steuerung der Ursprung des neuen Eintrags ist;
- und:
-- wenn die WRITE-Nachricht vor der DELETE-Nachricht eintrifft, das Warten der zentralen Adressauflösungsdatenbank (CARDB) für ein vordefiniertes Zeitintervall zwecks Eingangs der DELETE-Nachricht, ehe ein neuer Eintrag vorgenommen wird;
-- wenn die DELETE-Nachricht vor der WRITE-Nachricht eintrifft, das Warten der zentralen Adressauflösungsdatenbank (CARDB) auf den Eingang der zugehörigen WRITE-Nachricht für ein vordefiniertes Zeitintervall, ehe ein neuer Eintrag vorgenommen wird; und wenn bis zum Ende des Zeitintervalls keine zugehörige WRITE-Nachricht eingeht, das Löschen des zu löschenden Eintrags.

9. Digitales Speichermedium zur Speicherung eines Satzes ausführbarer Programmbefehle, die, wenn durch einen Computer ausgeführt, den Computer dazu veranlassen, folgende Schritte auszuführen:
- das Pflegen einer lokalen Adressauflösungsdatenbank (LDB1, LDB2), die einer Verarbeitungsressourcensteuerung oder Vernetzungsressourcensteuerung zugeordnet ist, zwecks Speicherung aller Zuordnungen von MAC-Adressen - IP-Adressen, die den Ressourcen zugeordnet sind, welche von besagter Steuerung gesteuert werden;
- die Pflege einer zentrale Adressauflösungsdatenbank (CARDB) für die Speicherung aller Zuordnungen von MAC-Adressen - IP-Adressen innerhalb des Datenzentrums durch das Kopieren eines jeden Eintrags in die zentrale Adressauflösungsdatenbank (CARDB), welcher in einer lokalen Datenbank (LDB1, LDB2) gespeichert wird;
- wenn eine Ressource die Auflösung einer IP-Adresse anfordert, den Empfang einer Unicast-Read-Nachricht von dieser Ressource, und daraufhin das Prüfen, ob in der lokalen Datenbank (LDB1, LDB2), die der Steuerung zugeordnet ist, die diese Ressource steuert, eine MAC-Adresse gespeichert ist, die dieser IP-Adresse zugeordnet ist; und:
-- wenn in der lokalen Datenbank eine dieser IP-Adresse zugeordnete MAC-Adresse gespeichert ist, das Zurverfügungstellen dieser MAC-Adresse für die Ressource, welche die Auflösung dieser IP-Adresse angefordert hat;
-- wenn in der lokalen Datenbank keine dieser IP-Adresse zugeordnete MAC-Adresse gespeichert ist, das Weiterleiten der Unicast-Read-Nachricht an die zentrale Adressauflösungsdatenbank (CARDB).

10. Computerprogramm-Produkt, das von einem Computer ausführbare Befehle zur Durchführung eines Verfahrens umfasst, wenn das Programm auf einem Computer ausgeführt wird, wobei das Verfahren die folgenden Schritte umfasst:
- das Pflegen einer lokalen Adressauflösungsdatenbank (LDB1, LDB2), die einer Verarbeitungsressourcensteuerung oder Vernetzungsressourcensteuerung zugeordnet ist, zwecks Speicherung aller Zuordnungen von MAC-Adressen - IP-Adressen,
die den Ressourcen zugeordnet sind, welche von besagter Steuerung gesteuert werden;
- die Pflege einer zentrale Adressauflösungsdatenbank (CARDB) für die Speicherung aller Zuordnungen von MAC-Adressen - IP-Adressen innerhalb des Datenzentrums durch das Kopieren eines jeden Eintrags in die zentrale Adressauflösungsdatenbank (CARDB), welcher in einer lokalen Datenbank (LDB1, LDB2) gespeichert wird;
- wenn eine Ressource die Auflösung einer IP-Adresse anfordert, den Empfang einer Unicast-Read-Nachricht von dieser Ressource, und daraufhin das Prüfen, ob in der lokalen Datenbank (LDB1, LDB2), die der Steuerung zugeordnet ist, die diese Ressource steuert, eine MAC-Adresse gespeichert ist, die dieser IP-Adresse zugeordnet ist; und:
-- wenn in der lokalen Datenbank eine dieser IP-Adresse zugeordnete MAC-Adresse gespeichert ist, das Zurverfügungstellen dieser MAC-Adresse für die Ressource, welche die Auflösung dieser IP-Adresse angefordert hat;
-- wenn in der lokalen Datenbank keine dieser IP-Adresse zugeordnete MAC-Adresse gespeichert ist, das Weiterleiten der Unicast-Read-Nachricht an die zentrale Adressauflösungsdatenbank (CARDB).

## Revendications

1. Procédé pour une résolution d'adresse centralisée dans un centre de données comprenant au moins une ressource de traitement, au moins un contrôleur de ressource de traitement, au moins une ressource de réseautage, et au moins un contrôleur de réseau défini par logiciel de ressource de réseautage ; ce procédé comprenant les étapes suivantes :
- maintenir une base de données de résolution d'adresse locale (LDB1) associée à un contrôleur de ressource de traitement, pour stocker toutes les associations d'adresse MAC - adresse IP des ressources de traitement contrôlées par ce contrôleur ;
- maintenir une base de données de résolution d'adresse locale (LDB2) associée à un contrôleur de réseau défini par logiciel de ressource de réseautage, pour stocker toutes les associations d'adresse MAC - adresse IP des ressources de réseautage contrôlées par ce contrôleur ;
- maintenir une base de données de résolution d'adresse centralisée (CARDB) pour stocker toutes les associations d'adresse MAC - adresse IP au sein du centre de données ;
- lorsqu'une ressource demande la résolution d'une adresse IP, envoyer un message de lecture unidiffusion de cette ressource à son contrôleur, ce contrôleur vérifiant si la base de données locale associée (LDB1, LDB2) stocke une adresse MAC associée à cette adresse IP, et :
-- si une adresse MAC, associée à cette adresse IP, est stockée dans cette base de données locale, fournir alors l'adresse MAC à la ressource qui a demandé la résolution de cette adresse IP ;
-- si aucune adresse MAC, associée à cette adresse IP, n'est stockée dans cette base de données locale, transférer alors le message de lecture unidiffusion à la base de données de résolution d'adresse centralisée (CARDB).

2. Procédé selon la revendication 1, dans lequel le message de lecture unidiffusion d'une ressource à son contrôleur contient une identité de tenant, Tenant ID, et une identité de réseau virtuel, VN ID.

3. Procédé selon la revendication 1, dans lequel le maintien d'une base de données de résolution d'adresse centralisée (CARDB) pour stocker toutes les associations d'adresse MAC - adresse IP au sein du centre de données comprend les étapes de chaque contrôleur copiant dans la base de données centralisée (CARDB) chaque entrée qui est écrite dans la base de données locale (LDB1, LDB2) associée à ce contrôleur.

4. Procédé selon la revendication 3, dans lequel le maintien d'une base de données de résolution d'adresse centralisée (CARDB) pour stocker toutes les associations d'adresse MAC - adresse IP au sein du centre de données comprend l'étape d'un contrôleur écrivant, dans la base de données de résolution d'adresse centralisée (CARDB), des informations identifiant ce contrôleur en association avec chacune de ses entrées qui sont copiées dans la base de données centralisée (CARDB).

5. Procédé selon la revendication 1, comprenant en outre l'étape d'envoi d'un message d'avertissement de la base de données centralisée (CARBD) à un contrôleur lorsqu'une entrée que ce contrôleur a copiée dans la base de données centrale est supprimée.

6. Procédé selon la revendication 1, dans lequel :
- la base de données de résolution d'adresse locale (LDB1) associée à un contrôleur de ressource de traitement est organisée en plusieurs tables (TX2, TY2, TZ2) de sorte qu'elle comprenne une table pour chaque paire identité de tenant - identité de réseau virtuel ;
- la base de données de résolution d'adresse locale (LDB2) associée à un contrôleur de réseau défini par logiciel de ressource de réseautage, est organisée en plusieurs tables (TX3, TY3, TZ3) de sorte qu'elle comprenne une table pour chaque paire identité de tenant - identité de réseau virtuel ;
- la base de données de résolution d'adresse centralisée (CARDB) est organisée en plusieurs tables (TX1, TY1, TZ1) de sorte qu'elle comprenne une table pour chaque paire identité de tenant - identité de réseau virtuel.

7. Procédé selon la revendication 1, dans lequel le maintien des bases de données de résolution d'adresse centrales (CARDB) comprend l'étape de suivi, dans la base de données de résolution d'adresse centralisée, de chaque contrôleur qui est à l'origine d'une entrée.

8. Procédé selon la revendication 7, dans lequel, si une machine se déplace au sein d'un même sous-réseau IP de sorte qu'elle soit contrôlée par un premier contrôleur de ressource de traitement et ensuite par un second contrôleur de ressource, le maintien des bases de données de résolution d'adresse centrales (CARDB) comprend l'étape suivante :
- le premier contrôleur envoyant un message DELETE (SUPPRIMER) aux bases de données de résolution d'adresse centrales (CARDB) pour supprimer une entrée ;
- le second contrôleur envoyant un message WRITE (ECRIRE) aux bases de données de résolution d'adresse centrales (CARDB) pour ajouter une nouvelle entrée ;
- informer la base de données de résolution d'adresse centralisée que le second contrôleur est à l'origine de la nouvelle entrée ;
- et :
-- si le message WRITE arrive avant le message DELETE, alors la base de données de résolution d'adresse centralisée (CARDB) attendant, pendant un intervalle de temps prédéterminé, l'arrivée d'un message DELETE, avant d'écrire une nouvelle entrée ;
-- si le message DELETE arrive avant le message WRITE, alors la base de données de résolution d'adresse centralisée (CARDB) attendant l'arrivée du message WRITE associé, pendant un intervalle de temps prédéterminé, avant d'écrire une nouvelle entrée ; et si aucun message WRITE associé n'est reçu avant la fin de l'intervalle de temps, supprimer l'entrée devant être supprimée.

9. Support de stockage de données numérique stockant un jeu d'instructions de programme exécutables par machine, qui, lorsqu'il est exécuté sur un ordinateur, amène l'ordinateur à effectuer les étapes suivantes :
- maintenir une base de données de résolution d'adresse locale (LDB1, LDB2) associée à un contrôleur de ressource de traitement ou de réseautage, pour stocker toutes les associations d'adresse MAC - adresse IP liées aux ressources contrôlées par ledit contrôleur ;
- maintenir une base de données de résolution d'adresse centralisée (CARDB) pour stocker toutes les associations d'adresse MAC - adresse IP au sein du centre de données, en copiant, dans la base de données centralisée (CARDB), chaque entrée qui est stockée dans une base de données locale (LDB1, LDB2) ;
- lorsqu'une ressource demande la résolution d'une adresse IP, recevoir un message de lecture unidiffusion en provenance de cette ressource, vérifier ensuite si la base de données locale (LDB1, LDB2) associée au contrôleur qui contrôle cette ressource, stocke une adresse MAC associée à cette adresse IP, et :
-- si une adresse MAC associée à cette adresse IP est stockée dans cette base de données locale, fournir alors l'adresse MAC à la ressource qui a demandé la résolution de cette adresse IP ;
-- si aucune adresse MAC associée à cette adresse IP n'est stockée dans cette base de données locale, transférer alors le message de lecture unidiffusion à la base de données de résolution d'adresse centralisée (CARDB).

10. Produit de programme informatique comprenant des instructions exécutables par ordinateur pour effectuer un procédé lorsque le programme est exécuté sur un ordinateur, le procédé comprenant les étapes suivantes :
- maintenir une base de données de résolution d'adresse locale (LDB1, LDB2) associée à un contrôleur de ressource de traitement ou de réseautage, pour stocker toutes les associations d'adresse MAC - adresse IP liées aux ressources contrôlées par ledit contrôleur ;
- maintenir une base de données de résolution d'adresse centralisée (CARDB) pour stocker toutes les associations d'adresse MAC - adresse IP au sein du centre de données, en copiant, dans la base de données centralisée (CARDB), chaque entrée qui est stockée dans une base de données locale (LDB1, LDB2) ;
- lorsqu'une ressource demande la résolution d'une adresse IP, recevoir un message de lecture unidiffusion en provenance de cette ressource, vérifier ensuite si la base de données locale (LDB1, LDB2) associée au contrôleur qui contrôle cette ressource, stocke une adresse MAC associée à cette adresse IP, et :
-- si une adresse MAC associée à cette adresse IP est stockée dans cette base de données locale, fournir alors l'adresse MAC à la ressource qui a demandé la résolution de cette adresse IP ;
-- si aucune adresse MAC associée à cette adresse IP n'est stockée dans cette base de données locale, transférer alors le message de lecture unidiffusion à la base de données de résolution d'adresse centralisée (CARDB).
